# EUROPEAN PATENT SPECIFICATION

(11) **EP 2 489 718 B1**
(45) Date of publication and mention of the grant of the patent: **19.07.2017**
(21) Application number: 09850334.5
(22) Date of filing: 12.10.2009
(51) Int. Cl.: C09K 11/78

(54) **BISMUTH ION SENSITIZED RARE EARTH GERMANATE LUMINESCENCE MATERIALS AND PREPARATION METHODS THEREOF**
BISMUTIONENSENSIBILISIERTE SELTENERD-GERMANATLUMINESZENZMATERIALIEN UND HERSTELLUNGSVERFAHREN DAFÜR
MATIÈRES LUMINESCENTES CONSISTANT EN GERMANATES DES TERRES RARES SENSIBILISÉS PAR DES IONS BISMUTH ET LEURS PROCÉDÉS DE PRÉPARATION

(43) Date of publication of application: 22.08.2012
(73) Proprietor: Ocean's King Lighting Science&Technology Co., Ltd., Guangdong 518052 (CN)
(72) Inventor: ZHOU, Mingjie, Guangdong 518052 (CN); MA, Wenbo, Guangdong 518052 (CN); SHI, Zhaopu, Guangdong 518052 (CN)
(74) Representative: Johnson, Richard Alan
(86) International application number: PCT/CN2009/074408
(87) International publication number: WO 2011/044720

(56) References cited:
- CASCALES AND C ZALDO C: "Spectroscopic Characterization and Systematic Crystal-Field Modeling of Optically Active Rare Earth R3+ Ions in the Bismuth Germanate BiY1-xRxGeO5 Host", CHEMISTRY OF MATERIALS, AMERICAN CHEMICAL SOCIETY, WASHINGTON, US, vol. 18, no. 16, 8 August 2006 (2006-08-08), pages 3742-3753, XP008160842, ISSN: 0897-4756, DOI: 10.1021/CM060785T [retrieved on 2006-07-11]
- ZHAO F ET AL: "Luminescent properties of Eu<3+>, Tb<3+> or Bi<3+> activated yttrium germanates", MATERIALS RESEARCH BULLETIN, ELSEVIER, KIDLINGTON, GB, vol. 38, no. 6, 26 May 2003 (2003-05-26), pages 931-940, XP004428203, ISSN: 0025-5408, DOI: 10.1016/S0025-5408(03)00086-2
- GUO P ET AL: "Novel phosphors of Eu<3+>, Tb<3+> or Bi<3+> activated Gd2GeO5", JOURNAL OF LUMINESCENCE, ELSEVIER BV NORTH-HOLLAND, NL, vol. 105, no. 1, 1 September 2003 (2003-09-01), pages 61-67, XP004443828, ISSN: 0022-2313, DOI: 10.1016/S0022-2313(03)00098-X
- CASCALES C ET AL: "Crystal-field analysis of Eu3+ energy levels in the new rare-earth R BiY1-xRxGeO5 oxide", JOURNAL OF SOLID STATE CHEMISTRY, ORLANDO, FL, US, vol. 171, no. 1-2, 15 February 2003 (2003-02-15), pages 262-267, XP008160838, ISSN: 0022-4596, DOI: 10.1016/S0022-4596(02)00173-1 [retrieved on 2003-02-12]
- CASCALES, C. ET AL.: 'Spectroscopic Characterization and Systematic Crystal-Field Modeling of Optically Active Rare Earth R3+ Ions in the Bismuth Germanate BiY,1-xRXGeO5 Host' CHEMISTRY OF MATERIALS vol. 18, no. 16, 2006, pages 3742 - 3753, XP008160842
- CASCALES, C. ET AL.: 'Crystal-field Analysis of Eu3+ Energy Levels in the New Rare-earth R BiY1-xRxGeO5 Oxide' JOURNAL OF SOLID STATE CHEMISTRY vol. 171, 2003, pages 262 - 267, XP008160838
- BARAN, E. J. ET AL.: 'Vibrational Spectra of YbBiGe05' JOURNAL OF RAMAN SPECTROSCOPY vol. 33, no. 10, 2002, pages 838 - 840, XP008160839
- CASCALES, C. ET AL.: 'New Rare-earth (Y, Yb) Bismuth (III) Germanates. An Initial Study of a Promising Series' JOURNAL OF MATERIALS CHEMISTRY vol. 12, 2002, pages 3626 - 3630, XP008160840

## Description

### FIELD OF THE INVENTION

The present invention relates to the luminescence materials and preparation methods, and more particularly to a bismuth ion sensitized rare earth germanate luminescence materials and preparation methods thereof.

### BACKGROUND OF THE INVENTION

Currently, as a new type of high-efficiency luminescence materials, rare earth luminescence materials has been developed into important luminescence materials in the fields of information display, lighting source, optoelectronic devices etc.. By improving luminescence intensity of the rare earth luminescence materials, the properties of luminescence devices could be effectively improved, meanwhile, the luminescence efficiency of the luminescence devices could be improved and the luminescence devices could effectively save energy. Therefore, the research and application of luminescence materials with high luminescence efficiency always are the important research contents in the fields of materials chemistry and materials physics.

The germanate luminescence materials doped with rare earth ion have good photoluminescence properties, and could emit light with high fluorescence color and high brightness after been excitated, thus could be applied as trichromatic fluorescence of UV-LED. However, further improves the luminescence properties of the materials has been the targets of the researchers. Cascales, C. and Zaldo, C., Journal of Solid State Chemistry, 171 (2003) 262-267 describes pale colored BiY₁₋ₓRₓGeO₅ (R = rare earth from Pr to Yb) polycrystalline samples. Guo et al., Journal of Luminescence, 105 (2003) 61-67 describes phosphors of Eu³⁺, Tb³⁺ and Bi³⁺ doped Gd₂GeO₅. Zhao et al., Materials Research Bulletin, 38 (2003) 931-940 describes Eu³⁺, Tb³⁺ and Bi³⁺ doped Y₂GeO₇ and Y₄GeO₈ phosphors. Cascales, C. and Zaldo, C., Chem. Mater. 2006, 18, 3742-3753 describes polycrystalline R-doped BiY₁₋ₓRₓGeO₅ (R = trivalent rare earth from Pr to Yb).

### SUMMARY OF THE INVENTION

The technical problem of the present invention to be solved is to provide bismuth ion sensitized rare earth germanate luminescence materials which may further increase photoluminescence properties of the germanate luminescence materials doped with rare earth ion.

The further technical problem of the present invention to be solved is to provide preparation methods of bismuth ion sensitized rare earth germanate luminescence materials, and the preparation methods are easy to carry out and the costs of such methods are low.

The technical solution to solve the technical problem in the present invention is: bismuth ion sensitized rare earth germanate luminescence materials, which are the compounds of the following general formula (Y_{1-x-y-z}AₓBi_{y}Ln_{z})₂GeO₅, wherein, the values of x,y and z are taken 0≤x<1, 0<y≤0.02, 0<z≤0.3, and x+y+z ≤ 1, respectively, while A is one of Gd, Lu, Sc and La, and Ln is at least one of Tm, Ho, Sm, Tb, Eu and Dy.

In the bismuth ion sensitized rare earth germanate luminescence materials, preferably, the values of x,y and z are taken 0≤x≤0.5, 0<y≤0.01, 0<z≤ 0.2, respectively.

The preparation methods of the bismuth ion sensitized rare earth germanate luminescence materials comprise: using oxides,carbonates, oxalates, acetates,nitrates or halides of Y, A, Bi, Ln and Ge as raw materials, wherein A is one of Gd, Lu, Sc and La, and Ln is at least one of Tm, Ho, Sm, Tb, Eu and Dy, adding the raw materials according to the molar ratio of each element in chemical formula (Y_{1-x-y-z}AₓBi_{y}Ln_{z})₂GeO₅, wherein, the values of x, y and z are taken 0≤x<1, 0<y≤ 0.02, 0<z ≤ 0.3, and x+y+z ≤ 1, respectively; homogeneously grinding the raw materials, sintering at 1300-1500°C for 6-24h, and then cooling them to room temperature to obtain the bismuth ion sensitized rare earth germanate luminescence materials.

In the preparation methods of the bismuth ion sensitized rare earth germanate luminescence materials, preferably, homogeneously grinding the raw materials, sintering at 1350-1450°C for 10-20h, and then cooling them to room temperature to obtain the bismuth ion sensitized rare earth germanate luminescence materials.

In the preparation methods of the bismuth ion sensitized rare earth germanate luminescence materials, preferably, the values of x, y and z are taken 0≤x ≤0.5, 0<y≤0.01, 0<z≤0.2, respectively.

In the preparation methods of the bismuth ion sensitized rare earth germanate luminescence materials, the purity of the raw materials is not lower than 99.99% when the raw materials are oxides of Y, A, Bi, Ln and Ge.

In the preparation methods of the bismuth ion sensitized rare earth germanate luminescence materials, the purity of the raw materials is not lower than analytically pure when the raw materials are carbonates, oxalates, acetates,nitrates or halides of Y, A, Bi, Ln and Ge.

In the present invention, bismuth ion (Bi³⁺) is introduced into the germanate luminescence materials doped with rare earth, and through the sensitization of the bismuth ion to other rare earth ion, the photoluminescence properties of germanate luminescence materials is significantly improved under same exciting conditions,while the wave length of the emitting light has not been changed. The luminescence materials in the present invention have good photoluminescence properties, could emit light with high color purity and high brightness after been stimulated, thus could be applied in light-emitting devices (LED).

The preparation methods of the present invention could prepare luminescence materials which have good photoluminescence properties, and the luminescence materials could emit light with high color purity and high brightness after been excitated. The process comprises a few steps, the process is relatively simple, and the process conditions are easy to carry out. The methods could provide products of high quality without introducing impurity. The process conditions are not required stringently, thus the costs of the methods are low, so that the preparation methods could be widely applied in the manufacture of luminescence materials.

### BRIEF DESCRIPTION OF THE DRAWINGS

Further description of the present invention will be illustrated, which combined with drawings and embodiments in the drawings:
FIG.1 shows the differences in the emission spectra of the comparison of the (Y_{0.9825}Bi_{0.0075}Tm_{0.01})₂GeO₅ materials which is prepared in embodiment 1, and the (Y_{0.99}Tm_{0.01})₂GeO₅ materials, as they are tested in same conditions of excitation wavelength of 314nm;
FIG.2 shows the differences in the emission spectra of the comparison of the (Y_{0.9525}Bi_{0.0075}Tb_{0.04})₂GeO₅ materials which is prepared in embodiment 6, and the (Y_{0.96}Tb_{0.04})₂GeO₅ materials, as they are tested in same conditions of excitation wavelength of 314nm;
FIG.3 shows the differences in the emission spectra of the comparison of the (Y_{0.9525}Bi_{0.0075}Eu_{0.04})₂GeO₅ materials which is prepared in embodiment 7, and the (Y_{0.96}Eu_{0.04})₂GeO₅ materials, as they are tested in same conditions of excitation wavelength of 314nm;
FIG.4 shows the differences in the emission spectra of the comparison of the (Y_{0.9625}Bi_{0.0075}Tm_{0.01}Tb_{0.01}Eu_{0.01})₂GeO₅ materials which is prepared in embodiment 18, and the (Y_{0.97}Tm_{0.01}Tb_{0.01}Eu_{0.01})₂GeO₅ materials, as they are tested in same conditions of excitation wavelength of 360nm;
FIG.5 shows the differences in the emission spectra of the comparison of the (Y_{0.9625}Bi_{0.0075}Tm_{0.01}Tb_{0.01}Eu_{0.01})₂GeO₅ materials which is prepared in embodiment 18 and the (Y_{0.97}Tm_{0.01}Tb_{0.01}Eu_{0.01})₂GeO₅ materials, as they are tested in same conditions of excitation wavelength of 314nm;

The emission spectra of the above figures are tested by fluorescence spectrophotometer of Daojin RF-5301PC, and the test conditions are: slit at 1.5nm, high sensitivity.

### DETAILED DESCRIPTION OF ILLUSTRATED EMBODIMENTS

### Embodiment 1 preparation of (Y_{0.9825}Bi_{0.0075}Tm_{0.01})₂GeO₅, by high temperature solid state method.

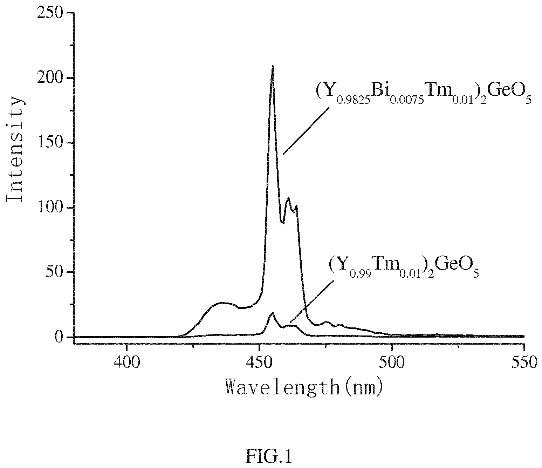

Adding 0.9825mmol Y₂O₃, 0.0075mmol Bi₂O₃, 0.01mmol Tm₂O₃ and Immol GeO₂ into a agate mortar, all of the oxidate with purity of 99.99%, grinding the oxidate homogeneously in the agate mortar to mix well, transferring the grinded powder to a corundum crucible, and placing the corundum crucible into a high-temperature box-type furnace and sintering at 1350°C for 10h, and then cooling the sintered product to room temperature and grinding them in mortar, finally obtaining the bismuth ion sensitized rare earth germanate luminescence materials (Y_{0.9825}Bi_{0.0075}Tm_{0.01})₂GeO₅ materials, which can emit blue light. FIG.1 shows the differences in the emission spectra of the comparison of the (Y_{0.9825}Bi_{0.0075}Tm_{0.01})₂GeO₅ which is prepared in embodiment 1, and the (Y_{0.99}Tm_{0.01})₂GeO₅ materials, as they are tested in same conditions of excitation wavelength of 314nm. As can be seen from the FIG.1, the introduction of Bi³⁺ greatly enhanced the luminescence of Tm³⁺, the luminescence intensity of the (Y_{0.9825}Bi_{0.0075}Tm_{0.01})₂GeO₅ is 12 times of that of (Y_{0.99}Tm_{0.01})₂GeO₅, under the excitation by excitation wavelength of 314nm, wherein, the intensity is a relative value and its unit can be selected anyway.

### Embodiment 2 preparation of (Lu_{0.9825}Bi_{0.0075}Tm_{0.01})₂GeO₅ by high temperature solid state method.

Adding 1.965mmol Lu(NO₃)₃, 0.015mmol Bi(NO₃)₃, 0.02mmol Tm(NO₃)₃ and Immol GeO₂ into a agate mortar, grinding the oxidate homogeneously in the agate mortar to mix well, transferring the grinded powder to a corundum crucible, and placing the corundum crucible into a high-temperature box-type furnace and sintering at 1450 °C for 8h, and then cooling the sintered product to room temperature and grinding them in mortar, finally obtaining the bismuth ion sensitized rare earth germanate luminescence materials (Lu_{0.9825}Bi_{0.0075}Tm_{0.01})₂GeO₅, which can emit blue light.

### Embodiment 3 preparation of (Y_{0.986}Bi_{0.004}Ho_{0.01})₂GeO₅ by high temperature solid state method

Adding 0.986mmol Y₂O₃, 0.004mmol Bi₂O₃, 0.01mmol Ho₂O₃ and Immol GeO₂ into a agate mortar, grinding the oxidate homogeneously in the agate mortar to mix well, transferring the grinded powder to a corundum crucible, and placing the corundum crucible into a high-temperature box-type furnace and sintering at 1300 °C for 24h, and then cooling the sintered product to room temperature and grinding them in mortar, finally obtaining the bismuth ion sensitized rare earth germanate luminescence materials (Y_{0.986}Bi_{0.004}Ho_{0.01})₂GeO₅, which can emit green light.

### Embodiment 4 preparation of (Y_{0.976}Bi_{0.004}Sm_{0.02})₂GeO₅ by high temperature solid state method

Adding 0.976mmol Y₂O₃, 0.004mmol Bi₂O₃, 0.02mmol Sm₂O₃ and Immol GeO₂ into a agate mortar, grinding the oxidate homogeneously in the agate mortar to mix well, transferring the grinded powder to a corundum crucible, and placing the corundum crucible into a high-temperature box-type furnace and sintering at 1500 °C for 6h, and then cooling the sintered product to room temperature and grinding them in mortar, finally obtaining the bismuth ion sensitized rare earth germanate luminescence materials (Y_{0.976}Bi_{0.004}Sm_{0.02})₂GeO₅, which can emit red light.

### Embodiment 5 preparation of (Y_{0.976}Bi_{0.004}Dy_{0.02})₂GeO₅ by high temperature solid state method

Adding 0.976mmol Y₂O₃, 0.004mmol Bi₂O₃, 0.02mmol Dy₂O₃ and Immol GeO₂ into a agate mortar, grinding the oxidate homogeneously in the agate mortar to mix well, transferring the grinded powder to a corundum crucible, and placing the corundum crucible into a high-temperature box-type furnace and sintering at 1380°C for 20h, and then cooling the sintered product to room temperature and grinding them in mortar, finally obtaining the bismuth ion sensitized rare earth germanate luminescence materials (Y_{0.976}Bi_{0.004}Dy_{0.02})GeO₅, which can emit white light.

### Embodiment 6 preparation of (Y_{0.9525}Bi_{0.0075}Tb_{0.04})₂GeO₅ by high temperature solid state method

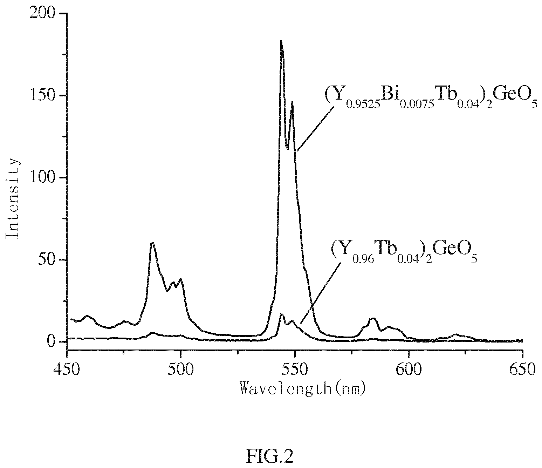

Adding 0.9525mmol Y₂O₃, 0.0075mmol Bi₂O₃, 0.02mmol Tb₄O₇ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.9525}Bi_{0.0075}Tb_{0.04})₂GeO₅ which can emit green light. FIG.2 shows the differences in the emission spectra of the comparison of the the (Y_{0.9525}Bi_{0.0075}Tb_{0.04})₂GeO₅ materials which is prepared in embodiment 6, and the (Y_{0.96}Tb_{0.04})₂GeO₅ materials, as they are tested in same conditions of excitation wavelength of 314nm. As can be seen from the FIG.2, the introduction of Bi³⁺ greatly enhanced the luminescence of Tb³⁺. The luminescence intensity of the(Y_{0.9525}Bi_{0.0075}Tb_{0.04})₂GeO₅ is 11 times of that of ((Y_{0.96}Tb_{0.04})₂GeO₅, under the excitation by excitation wavelength of 314nm.

### Embodiment 7 preparation of (Y_{0.9525}Bi_{0.0075}Eu_{0.04})GeO₅ by high temperature solid state method

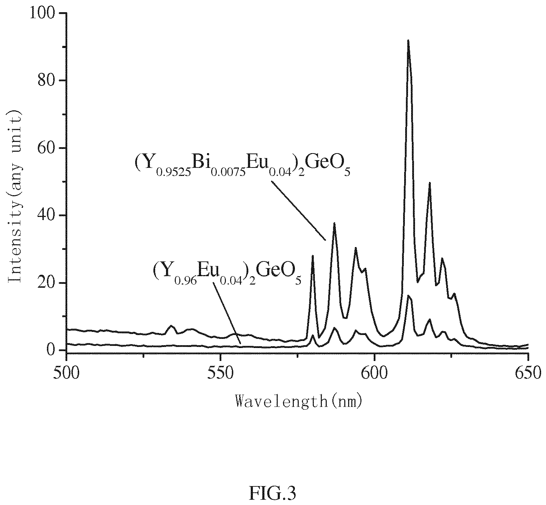

Adding 0.9525mmol Y₂O₃, 0.0075mmol Bi₂O₃, 0.04mmol Eu₂O₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.9525}Bi_{0.0075}Eu_{0.04})₂GeO₅ which can emit red light. FIG.3 shows the differences in the emission spectra of the comparison of the (Y_{0.9525}Bi_{0.0075}Eu_{0.04})₂GeO₅ materials which is prepared in embodiment 7, and the (Y_{0.96}Eu_{0.04})₂GeO₅ materials, as they are tested in same conditions of excitation wavelength of 314nm. As can be seen from the FIG.3, the introduction of Bi³⁺ greatly enhanced the luminescence of Eu³⁺. The luminescence intensity of the (Y_{0.96}Eu_{0.04})₂GeO₅ is 6 times of that of (Y_{0.96}Eu_{0.04})₂GeO₅, under the excitation by excitation wavelength of 314nm.

### Embodiment 8 preparation of (_{Y0.886Gd0.1Bi0.004Tm0.01})₂GₑO₅ by high temperature solid state method

Adding 0.886mmol Y₂O₃, 0.1mmol Gd₂O₃, 0.004mmol Bi₂O₃, 0.01mmol Tm₂O₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.886}Gd_{0.1}Bi_{0.004}Tm_{0.01})₂GeO₅ which can emit blue light.

### Embodiment 10 preparation of (Y_{0.686}Gd_{0.3}Bi_{0.004}Ho_{0.01})₂GeO₅ by high temperature solid state method

Adding 0.686mmol Y₂O₃, 0.3mmol Gd₂O₃, 0.004mmol Bi₂O₃, 0.01mmol Ho₂O₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.686}Gd_{0.3}Bi_{0.004}Ho_{0.01})₂GeO₅ which can emit green light.

### Embodiment 11 preparation of (Y_{0.196}Sc_{0.7}Bi_{0.004}Sm_{0.11})₂GeO₅ by high temperature solid state method

Adding 0.196mmol Y₂O₃, 0.7mmol Sc₂O₃, 0.004mmol Bi₂O₃, 0.1mmol Sm₂O₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.196}Sc_{0.7}Bi_{0.004}Sm_{0.1})₂GeO₅ which can emit red light.

### Embodiment 12 preparation of (Y_{0.076}La_{0.9}Bi_{0.004}Dy_{0.02})₂GeO₅ by high temperature solid state method

Adding 0.076mmol Y₂O₃, 0.9mmol La ₂O₃, 0.004mmol Bi₂O₃, 0.02mmol Dy₂O₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.076}La_{0.9}Bi_{0.004}Dy_{0.02})₂GeO₅ which can emit white light.

### Embodiment 13 preparation of (Y_{0.596}Gd_{0.1}Bi_{0.004}Tb_{0.3})₂GeO₅ by high temperature solid state method

Adding 1.192 mmol Y(CH₃COO)₃, 0.2mmol Gd(CH₃COO)₃, 0.008mmol Bi(CH₃COO)₃, 0.6mmol Tb(CH₃COO)₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.596}Gd_{0.1}Bi_{0.004}Tb_{0.3})₂GeO₅ which can emit green light.

### Embodiment 14 preparation of (Y_{0.746}Gd_{0.1}Bi_{0.004}Eu_{0.15})₂GeO₅ by high temperature solid state method

Adding 1.492mmol YCl₃, 0.2mmol GdCl₃, 0.008mmolBiCl₃, 0.3mmol EuCl₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.746}Gd_{0.1}Bi_{0.004}Eu_{0.15})₂GeO₅ which can emit red light.

### Embodiment 15 preparation of (Y_{0.485}La_{0.5}Bi_{0.005}Tm_{0.01})₂GeO₅ by high temperature solid state method

Adding 0.485mmol Y₂O₃, 0.5mmol La₂O₃, 0.005mmol Bi₂O₃, 0.01mmol Tm₂O₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.485}La_{0.5}Bi_{0.005}Tm_{0.01})₂GeO₅ which can emit blue light.

### Embodiment 16 preparation of (Y_{0.88}Lu_{0.1}Bi_{0.01}Tm_{0.01}GeO₅ by high temperature solid state method

Adding 0.88mmol Y₂(C₂O₄)₃, 0.1mmol Lu₂(C₂O₄)₃, 0.01mmol Bi₂(C₂O₄)₃, 0.01mmol Tm₂O₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.88}Lu_{0.1}Bi_{0.01}Tm_{0.01})₂GeO₅ which can emit blue light.

### Embodiment 17 preparation of (Y_{0.87}Sc_{0.1}Bi_{0.02}Tm_{0.01})₂GeO₅ by high temperature solid state method

Adding 0.87mmol Y₂(CO₃)₃, 0.1mmolSc₂(CO₃)₃, 0.02mmol Bi₂(CO₃)₃, 0.01mmol Tm₂O₃ and Immol GeO₂ into a agate mortar, grinding the oxidate homogeneously in the agate mortar to mix well, and other steps are as the same as embodiment 1, finally obtaining the bismuth ion sensitized rare earth germanate luminescence materials (Y_{0.87}Sc_{0.1}Bi_{0.02}Tm_{0.01})₂GeO₅ which can emit blue light.

### Embodiment 18 preparation of (Y_{0.9625}Bi_{0.0075}Tm_{0.01}Tb_{0.01}Eu_{0.01})₂GeO₅ by high temperature solid state method

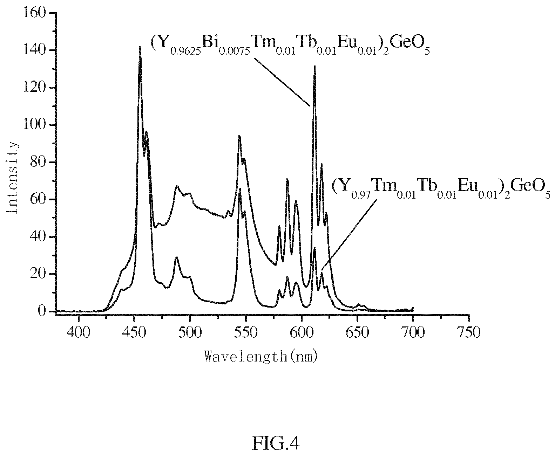

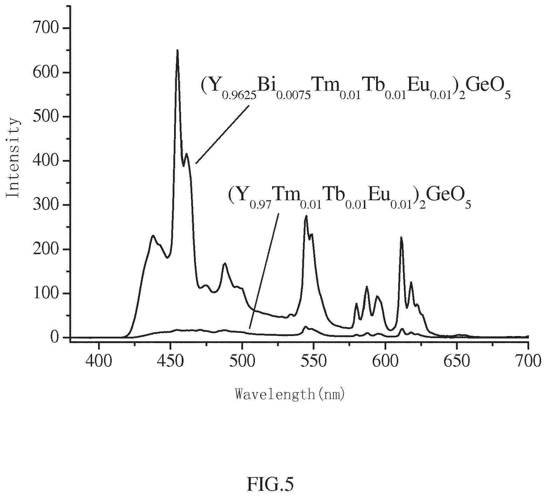

Adding 0.9625mmol Y₂O₃, 0.0075mmol Bi₂O₃, 0.01mmol Tm₂O₃, 0.005mmol Tb₄O₇, 0.01mmol Eu₂O₃ and 1mmol GeO₂, grinding homogeneously in a agate mortar to mix well, and other steps are as the same as embodiment 1, finally obtaining the bismuth ion sensitized rare earth germanate luminescence materials (Y_{0.9625}Bi_{0.0075}Tm_{0.01}Tb_{0.01}Eu_{0.01})₂GeO₅ which can emit white light. FIG.4 is the emission spectra figure of the comparison of the (Y_{0.9625}Bi_{0.0075}Tm_{0.01}Tb_{0.01}Eu_{0.01})₂GeO₅ materials prepared in this embodiment, and the (Y_{0.97}Tm_{0.01}Tb_{0.01}Eu_{0.01})₂GeO₅ materials, they are tested in same conditions of excitation wavelength of 360nm. As shown in FIG.4, under the excitation by excitation wavelength of 360nm, the introduction of Bi³⁺ has not enhanced the luminescence of Tm³⁺, but greatly enhanced the blue, green and red light luminescence intensity of Tb³⁺ and Eu³⁺ emitted by luminescence materials in 470~ 630nm, thus the (Y_{0.9625}Bi_{0.0075}Tm_{0.01}Tb_{0.01}Eu_{0.01})₂GeO₅ prepared in this embodiment has higher color rendering index. FIG.5 is the emission spectra figure of the comparison of the (Y_{0.9625}Bi_{0.0075}Tm_{0.01}Tb_{0.01}Eu_{0.01})₂GeO₅ materials prepared in embodiment 18, and the (Y_{0.97}Tm_{0.01}Tb_{0.01}Eu_{0.01})₂GeO₅ materials, they are tested in same conditions of excitation wavelength of 314nm. As shown in FIG.5, under the excitation by excitation wavelength of 314nm, the introduction of Bi³⁺ greatly enhanced the luminescence of Tm³⁺, Tb³⁺ and Eu³⁺, thus the(Y_{0.9625}Bi_{0.0075}Tm_{0.01}Tb_{0.01}Eu_{0.01})₂GeO₅ prepared in this embodiment has higher luminescence brightness.

## Claims

1. Bismuth ion sensitized rare earth germanate luminescence materials, wherein are the compounds of the following general formula (Y_{1-x-y-z}AₓBi_{y}Ln_{z})₂GeO₅, wherein, the values of x,y and z are taken 0≤x<1, 0<y≤0.02, 0<z ≤0.3, and x+y+z≤1, respectively, while A is one of Gd, Lu, Sc and La, and Ln is at least one of Tm, Ho, Sm, Tb, Eu and Dy.

2. The bismuth ion sensitized rare earth germanate luminescence materials according to claim 1, wherein, the values of the x,y and z are taken 0≤x≤ 0.5, 0<y≤0.01, 0<z≤0.2, respectively.

3. The preparation methods of the bismuth ion sensitized rare earth germanate luminescence materials, wherein, comprise: using oxides, carbonates, oxalates, acetates, nitrates or halides of Y, A, Bi, Ln and Ge as raw materials, wherein A is one of Gd, Lu, Sc and La, and Ln is at least one of Tm, Ho, Sm, Tb, Eu and Dy, adding the raw materials according to molar ratio of each element in chemical formula (Y_{1-x-y-z}AₓBi_{y}Ln_{z})₂GeO₅, wherein, the values of the x,y and z are taken 0≤x <1, 0<y≤0.02, 0<z≤0.3, and x+y+z≤1, respectively; homogeneously grinding the raw materials, sintering at 1300-1500°C for 6-24h, and then cooling them to room temperature to obtain the bismuth ion sensitized rare earth germanate luminescence materials.

4. The preparation methods of the bismuth ion sensitized rare earth germanate luminescence materials according to claim 3, wherein, homogeneously grinding the raw materials, sintering at 1350-1450°C for 10-20h, and then cooling them to room temperature to obtain the bismuth ion sensitized rare earth germanate luminescence materials.

5. The preparation methods of the bismuth ion sensitized rare earth germanate luminescence materials according to claim 4, wherein, the values of the x,y and z are taken 0≤x≤0.5, 0<y≤0.01, 0<z≤0.2, respectively.

6. The preparation methods of the bismuth ion sensitized rare earth germanate luminescence materials according to any one of claim 3-5, wherein, the purity of the raw materials is not lower than 99.99% when the raw materials are oxides of Y, A, Bi, Ln and Ge.

7. The preparation methods of the bismuth ion sensitized rare earth germanate luminescence materials according to any one of claim 3-6, wherein, the purity of the raw materials is not lower than analytically pure when the raw materials are carbonates, oxalates, acetates,nitrates or halides of Y, A, Bi, Ln and Ge.

## Patentansprüche

1. Lumineszierende, mit Bismut-Ionen sensibilisierte Seltenerd-Germanat-Materialien, wobei die Verbindungen der folgenden allgemeinen Formel (Y_{1-x-y-z}AₓBi_{y}Ln_{z})₂GeO₅ sind, wobei die Werte von x, y und z aus 0 ≤ x < 1, 0 < y ≤ 0,02, 0 < z ≤ 0,3 bzw. x + y + z ≤ 1 entnommen sind, während A eines aus Gd, Lu, Sc und La ist und Ln zumindest eines aus Tm, Ho, Sm, Tb, Eu und Dy ist.

2. Lumineszierende, mit Bismut-Ionen sensibilisierte Seltenerd-Germanat-Materialien nach Anspruch 1, wobei die Werte von x, y und z aus 0 ≤ x ≤ 0,5, 0 < y ≤ 0,01 bzw. 0 < z ≤ 0,2 entnommen sind.

3. Herstellungsverfahren für die lumineszierenden, mit Bismut-Ionen sensibilisierten Seltenerd-Germanat-Materialien, umfassend: die Verwendung von Oxiden, Carbonaten, Oxalaten, Acetaten, Nitraten oder Halogeniden von Y, A, Bi, Ln und Ge als Rohmaterialien, wobei A eines aus Gd, Lu, Sc und La ist und Ln zumindest eines aus Tm, Ho, Sm, Tb, Eu und Dy ist, das Zusetzen der Rohmaterialien gemäß dem Molverhältnis eines jeden Elements in der chemischen Formel (Y_{1-x-y-z}AₓBi_{y}Ln_{z})₂GeO₅, wobei die Werte von x, y und z aus 0 ≤ x < 1, 0 < y ≤ 0,02, 0 < z ≤ 0,3 bzw. x + y + z ≤ 1 entnommen sind; das homogene Vermahlen der Rohmaterialien, Sintern 6-24 h lang bei 1300-1500 °C und das anschließende Abkühlen auf Raumtemperatur, um die lumineszierenden, mit Bismut-Ionen sensibilisierten Seltenerd-Germanat-Materialien zu erhalten.

4. Herstellungsverfahren für die lumineszierenden, mit Bismut-Ionen sensibilisierten Seltenerd-Germanat-Materialien nach Anspruch 3, umfassend das homogene Vermahlen der Rohmaterialien, das Sintern 10-20 h lang bei 1350-1450 °C und das anschließende Abkühlen auf Raumtemperatur, um die lumineszierenden, mit Bismut-Ionen sensibilisierten Seltenerd-Germanat-Materialien zu erhalten.

5. Herstellungsverfahren für die lumineszierenden, mit Bismut-Ionen sensibilisierten Seltenerd-Germanat-Materialien nach Anspruch 4, wobei die Werte von x, y und z aus 0 ≤ x ≤ 0,5, 0 < y ≤ 0,01 bzw. 0 < z ≤ 0,2 entnommen sind.

6. Herstellungsverfahren für die lumineszierenden, mit Bismut-Ionen sensibilisierten Seltenerd-Germanat-Materialien nach einem der Ansprüche 3 bis 5, wobei die Reinheit der Rohmaterialien nicht weniger als 99,99 % beträgt, wenn die Rohmaterialien Oxide von Y, A, Bi, Ln und Ge sind.

7. Herstellungsverfahren für die lumineszierenden, mit Bismut-Ionen sensibilisierten Seltenerd-Germanat-Materialien nach einem der Ansprüche 3 bis 6, wobei die Reinheit der Rohmaterialien nicht weniger als analytisch rein ist, wenn die Rohmaterialien Carbonate, Oxalate, Acetate, Nitrate oder Halogenide von Y, A, Bi, Ln und Ge sind.

## Revendications

1. Matériaux luminescents de germanate dopés en terres rares sensibilisées par ion bismuth, dans lesquels les composés ont la formule générale suivante (Y_{1-x-y-z}AₓBi_{y}Ln_{z})₂GeO₅, où les valeurs de x, y et z satisfont à 0≤x≤1, 0<y≤0,02, 0<z≤0,3, et x+y+z≤1, respectivement, alors que A est l'un parmi Gd, Lu, Sc et La, et Ln est au moins l'un parmi Tm, Ho, Sm, Tb, Eu et Dy.

2. Matériaux luminescents de germanate dopés en terres rares sensibilisées par ion bismuth selon la revendication 1, dans lesquels les valeurs de x, y et z satisfont à 0≤x≤0,5, 0<y≤0,01, 0<z≤0,2, respectivement.

3. Procédés de préparation des matériaux luminescents de germanate dopés en terres rares sensibilisées par ion bismuth, qui incluent : l'utilisation comme matières premières d'oxydes, carbonates, oxalates, acétates, nitrates ou halogénures de Y, A, Bi, Ln et Ge, où A est l'un parmi Gd, Lu, Sc et La, et Ln est au moins l'un parmi Tm, Ho, Sm, Tb, Eu et Dy, l'ajout des matières premières conformément à un rapport molaire de chaque élément de la formule chimique (Y_{1-x-y-z}AₓBi_{y}Ln_{z})₂Ge0₅, où les valeurs de x, y et z satisfont à 0≤x<l, 0<y≤0,02, 0<z≤0,3, et x+y+z≤1, respectivement ; le broyage homogène des matières premières, le frittage entre 1 300-1 500 °C pendant 6 à 24 h, puis le refroidissement de ceux-ci à la température ambiante pour obtenir les matériaux luminescents de germanate dopés en terres rares sensibilisées par ion bismuth.

4. Procédés de préparation des matériaux luminescents de germanate dopés en terres rares sensibilisées par ion bismuth selon la revendication 3, qui incluent le broyage homogène des matières premières, le frittage entre 1 350 et 1 450 °C pendant 10 à 20 h, puis le refroidissement de ceux-ci à la température ambiante pour obtenir les matériaux luminescents de germanate dopés en terres rares sensibilisées par ion bismuth.

5. Procédés de préparation des matériaux luminescents de germanate dopés en terres rares sensibilisées par ion bismuth selon la revendication 4, dans lesquels les valeurs de x, y et z satisfont à 0≤x≤0,5, 0<y≤0,01, 0<z≤0,2, respectivement.

6. Procédés de préparation des matériaux luminescents de germanate dopés en terres rares sensibilisées par ion bismuthselon l'une quelconque des revendications 3 à 5, dans lesquels la pureté des matières premières n'est pas inférieure à 99,99 % lorsque les matières premières sont des oxydes de Y, A, Bi, Ln et Ge.

7. Procédés de préparation des matériaux luminescents de germanate dopés en terres rares sensibilisées par ion bismuth selon l'une quelconque des revendications 3 à 6, dans lesquels la pureté des matières premières n'est pas inférieure à une valeur analytiquement pure lorsque les matières premières sont des carbonates, oxalates, acétates, nitrates ou halogénures de Y, A, Bi, Ln et Ge.
